# EUROPÄISCHE PATENTSCHRIFT

(11) **EP 3 586 030 B1**
(45) Veröffentlichungstag und Bekanntmachung des Hinweises auf die Patenterteilung: **10.07.2024**
(21) Anmeldenummer: 18705846.6
(22) Anmeldetag: 06.02.2018
(51) Int. Cl.: F16F 9/36

(54) **VERSCHLUSSPAKET, SCHWINGUNGSDÄMPFER UND VERWENDUNG EINES DICHTUNGSHALTERS**
CLOSURE PACKAGE, VIBRATION DAMPER, AND USE OF A SEAL HOLDER
ENSEMBLE DE FERMETURE, AMORTISSEUR DE VIBRATIONS ET UTILISATION D'UN SUPPORT DE GARNITURE D'ÉTANCHEITÉ

(30) Priorität: 24.02.2017 DE 102017103925
(43) Veröffentlichungstag der Anmeldung: 01.01.2020
(73) Patentinhaber: thyssenkrupp Bilstein GmbH, 58256 Ennepetal (DE); thyssenkrupp AG, 45143 Essen (DE); ThyssenKrupp Bilstein of America Inc., Poway, CA 92064 (US)
(72) Erfinder: WIENERS, Daniel, 44803 Bochum (DE); SCHMIDT, Klaus, 51519 Odenthal (DE); MCALVEY, Benjamin, San Diego, California 92126 (US); KANE, Terrence, Encinitas, California 92024 (US)
(74) Vertreter: thyssenkrupp Intellectual Property GmbH
(86) Internationale Anmeldenummer: PCT/EP2018/052865
(87) Internationale Veröffentlichungsnummer: WO 2018/153649

(56) Entgegenhaltungen:
- EP-A1- 0 496 324
- DE-B4- 102007 005 690
- US-A1- 2003 110 942
- US-A1- 2008 083 324

## Beschreibung

Die Erfindung betrifft einen Schwingungsdämpfer mit einem Verschlusspaket. Ein Verschlusspaket mit den Merkmalen des Oberbegriffs des Anspruchs 1 ist beispielsweise aus der DE 10 2007 005 690 B4 bekannt. Die US 2008083324 A1 beschreibt einen Schwingungsdämpfer mit einem Verschlusspaket.

Derartige Verschlusspakete bzw. Schwingungsdämpfer mit derartigen Verschlusspaketen werden in an sich bekannter Weise in Kraftfahrzeugen eingesetzt, um Schwingungen des Fahrwerks zu dämpfen. Schwingungsdämpfer weisen ein Dämpferrohr und einen Arbeitskolben auf, der hubbeweglich im Dämpferrohr angeordnet und mit einer Kolbenstange verbunden ist. Die Kolbenstange führt aus dem Dämpferrohr heraus und wird im Verschlusspaket axial beweglich gelagert und abgedichtet. Im Dämpferrohr wird Öl durch die Bewegung des Arbeitskolbens zwischen zwei Arbeitsräumen bewegt, um Schwingungen zu dämpfen.

Aus der eingangs genannten Druckschrift ist bekannt, dass das Verschlusspaket eine Dichtung aufweist, die gegen die Kolbenstange abdichtet, sodass das im Dämpferrohr befindliche Öl nicht austreten kann. Das Verschlusspaket hat die weitere Funktion, die Kolbenstange bei der Hubbewegung zu führen.

Wenn der Schwingungsdämpfer hohen Temperaturen ausgesetzt wird, beispielsweise durch Feuer bei einem Unfall, unsachgemäße Benutzung oder falsche Lagerung, entstehen hohe Drücke im Inneren des Schwingungsdämpfers.

Diese können dazu führen, dass der Schwingungsdämpfer beschädigt wird und es dadurch Beschädigung umliegender Bauteilen führt.

Es ist im Stand der Technik bekannt, Drucksicherheitsventile zu verwenden, um kontrolliert das unter Druck stehende Öl abzulassen. Des Weiteren sind Sollbruchstellen bekannt, um eine möglichst kontrollierte Druckabsenkung zu erreichen. Die bekannten technischen Lösungen werden als nicht ausreichend angesehen, um ungewollt hohe Drücke im Dämpferrohr kontrolliert zu verringern.

Der Erfindung liegt die Aufgabe zu Grunde, ein Verschlusspaket der eingangs genannten Art dahingehend zu verbessern, dass auf einfache Weise im Notfall eine kontrollierte und wirkungsvolle Druckabsenkung erreicht wird, wenn das Verschlusspaket in einen Schwingungsdämpfer zum Verschließen des Dämpferrohres eingebaut wird.

Der Erfindung liegt ferner die Aufgabe zu Grunde, einen Schwingungsdämpfer und die Verwendung eines Dichtungshalters anzugeben.

Mit Blick auf den Schwingungsdämpfer wird die Aufgabe erfindungsgemäß durch den Gegenstand des Anspruchs 1 gelöst.

Die Erfindung beruht auf dem Gedanken, einen Schwingungsdämpfer mit einem Verschlusspaket anzugeben, das mit einem Dämpferrohr des Schwingungsdämpfers verbunden ist und eine Kolbenstange führt und abdichtet, wobei das Verschlusspaket einen Grundkörper aufweist, der mit einem Dämpferrohr verbunden werden kann und 2 Enden aufweist. Das erste Ende bildet im Gebrauch, d.h. im montierten Zustand, eine Stirnseite des Dämpferrohres. Das zweite Ende ist im Gebrauch im Dämpferrohr angeordnet. Das Verschlusspaket umfasst ferner eine Dichtung, die im Grundkörper zur Abdichtung einer Kolbenstange angeordnet ist. Ein Dichtungshalter ist zwischen der Dichtung und dem Grundkörper am ersten Ende des Grundkörpers angeordnet. Der Dichtungshalter ist zur axialen Fixierung der Dichtung im Grundkörper formschlüssig und/oder kraftschlüssig mit dem Grundkörper verbunden. Der Dichtungshalter ist als notschmelzbarer Dichtungshalter ausgebildet, der bei Überhitzung des Schwingungsdämpfers zum Lösen der Verbindung mit dem Grundkörper thermoplastisch verformbar ist.

Die Erfindung hat den Vorteil, dass die für die ungewollte, übermäßige Druckerhöhung verantwortliche Wärme, dazu verwendet wird, das Dämpferrohr zu öffnen, um das unter erhöhtem Druck stehende Öl kontrolliert abzulassen, bevor der Schwingungsdämpfer beschädigt wird. Damit wird eine besonders sichere Lösung erreicht, weil die Sicherheitsfunktion mit der Ursache für die Druckerhöhung gekoppelt wird. Konkret ist dazu erfindungsgemäß vorgesehen, dass der Dichtungshalter als notschmelzbarer Dichtungshalter ausgebildet ist, der bei Überhitzung des Schwingungsdämpfers zum Lösen der Verbindung mit dem Grundkörper thermoplastisch verformt werden kann.

Mit anderen Worten wird bei Erreichen einer kritischen Grenztemperatur die Formbeständigkeit des Dichtungshalters aufgelöst, sodass die Verbindung zwischen dem Dichtungshalter und dem Grundkörper getrennt wird. Der Dichtungshalter löst sich dadurch aus dem Verschlusspaket und gibt die Dichtung frei, die ebenfalls aufgrund des im Dämpferrohres herrschenden Überdrucks aus ihrer Dichtposition bewegt wird. Damit wird eine Öffnung im Verschlusspaket gebildet, durch die das Öl kontrolliert abfließen kann.

Erfindungsgemäß ist vorgesehen, dass der Dichtungshalter zwischen der Dichtung und dem Grundkörper am ersten Ende des Grundkörpers, also im Bereich der Stirnseite des Dämpferrohres, angeordnet ist. Dadurch wird erreicht, dass der Dichtungshalter bei thermoplastischer Verformung ungehindert aus dem Grundkörper austreten kann und so die Dichtung freigibt.

Die Erfindung kommt also ohne aufwändige Sicherheitsventile aus und erreicht auf einfache Art und Weise eine Notfallsicherung, die den bekannten Lösungen überlegen ist.

Bevorzugte Ausführungsformen der Erfindung sind in den Unteransprüchen angegeben.

So kann der Dichtungshalter ein Material umfassen, das eine Wärmeformbeständigkeitstemperatur im Bereich von -40°C bis +160°C aufweist. Durch die Einstellung der Temperatur in diesem Bereich, werden die üblicherweise zu einer Fehlfunktion des Schwingungsdämpfers führenden Situationen erfasst. Vorzugsweise weist der Grundkörper einen konischen Halteabschnitt auf, der sich nach außen hin verjüngt. Der Dichtungshalter ist entsprechend geformt, sodass eine formschlüssige Verbindung, insbesondere eine form- und kraftschlüssige Verbindung gebildet wird. Die auf die Dichtung durch den Dichtungshalter wirkende Haltekraft ist axial nach innen gerichtet, sodass die Dichtung im Betrieb in der Dichtposition fixiert ist. Wenn der Dichtungshalter aufgrund hoher Temperaturen seine Wärmeformbeständigkeit verliert, wird der Dichtungshalter aus dem Halteabschnitt herausgedrückt und gibt die Dichtung frei, die ebenfalls aus dem Grundkörper heraus bewegt wird. Durch den dadurch entstehenden Ringspalt zwischen der Kolbenstange und dem Grundkörper kann das Öl entweichen.

Der Dichtungshalter kann zumindest abschnittsweise auf dem Umfang der Dichtung und/oder zumindest abschnittsweise in axialer Richtung des Grundkörpers über die Dichtung in Richtung des ersten Endes vorstehen. In beiden Fällen ist der Dichtungshalter so angeordnet, dass eine Haltekraft auf die Dichtung im Betrieb ausgeübt wird, die die Dichtung an ihrer Position.

Die Dichtung kann mehrteilig ausgebildet sein und eine erste Stangendichtung zur Anlage an der Kolbenstange aufweisen. Die Dichtung weist eine zweite Zwischendichtung zur Abdichtung der Stangendichtung gegen den Grundkörper auf. Die Stangendichtung und die Zwischendichtung sind bei diesem Ausführungsbeispiel lösbar verbunden. Dies hat den Vorteil, dass eine gute Dichtfunktion beibehalten wird und die Stangendichtung im Notfall, d.h. bei einer thermoplastischen Verformung des Dichtungshalters freigegeben wird.

Alternativ kann die Dichtung einteilig ausgebildet sein, wodurch die Herstellung und Montage des Schwingungsdämpfers vereinfacht wird. Auch in diesem Fall ist es durch ein Auflösen der Wärmeformbeständigkeit des Dichtungshalters möglich, dass die Dichtung aus der Konstruktionslage heraus bewegt wird und die Stangendichtung freigibt.

Vorzugsweise ist eine Führungsbuchse zwischen der Dichtung und dem zweiten Ende angeordnet. Es handelt sich um eine Nassführung, bei der die Führungsbuchse durch das im Dämpfungsrohr befindliche Öl geschmiert wird.

Die Erfindung umfasst einen Schwingungsdämpfer mit einem erfindungsgemäßen Verschlusspaket, das mit dem Dämpferrohr des Schwingungsdämpfers verbunden ist und die Kolbenstange führt und abdichtet. Der Schwingungsdämpfer kann ein Dämpfer mit einer Einrohr-Bauweise oder einer Zweirohr-Bauweise oder Mehrrohr-Bauweise sein. Besonders bevorzugt ist der Einsatz in einem Einrohrdämpfer.

Die Erfindung umfasst ferner die Verwendung eines schmelzbaren Dichtungshalters als notschmelzender Dichtungshalter für ein Verschlusspaket eines Schwingungsdämpfers. Der notschmelzende Dichtungshalter ist bei Überhitzung des Schwingungsdämpfers thermoplastisch verformbar. Zu den Vorteilen der Verwendung bzw. des Schwingungsdämpfers wird auf die Ausführungen im Zusammenhang mit dem Verschlusspaket verwiesen.

Die Erfindung wird nachfolgend mit weiteren Einzelheiten unter Bezug auf die beigefügten schematischen Zeichnungen anhand von Ausführungsbeispielen näher erläutert.

In diesen zeigen
- Fig. 1: einen Querschnitt durch ein Verschlusspaket nach einem erfindungsgemäßen Ausführungsbeispiel mit einer mehrteiligen Dichtung;
- Fig. 2: einen Querschnitt durch ein Verschlusspaket nach einem weiteren erfindungsgemäßen Ausführungsbeispiel mit einer einteiligen Dichtung; und
- Fig. 3: einen Längsschnitt durch einen Schwingungsdämpfer mit einem Verschlusspaket nach einem erfindungsgemäßen Ausführungsbeispiel.

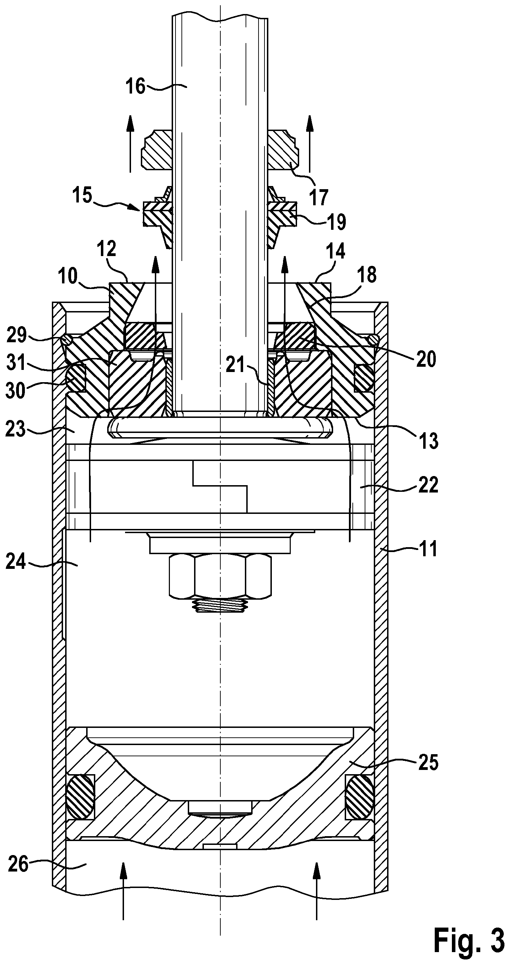

In Fig. 3 ist ein Längsschnitt eines Schwingungsdämpfers für das Fahrwerk eines Kraftfahrzeugs dargestellt. Bei diesem Beispiel handelt es sich um einen Schwingungsdämpfer in Einrohr-Bauweise. Andere Schwingungsdämpfer, beispielsweise Schwingungsdämpfer in Zweirohr-Bauweise können ebenfalls im Zusammenhang mit der Erfindung verwendet werden.

Der Schwingungsdämpfer umfasst ein Dämpferrohr 11, in dem ein Arbeitskolben 22 axial beweglich angeordnet ist. Der Arbeitskolben 22 ist mit einer Kolbenstange 16 fest verbunden, beispielsweise verschraubt. Im Arbeitskolben sind (nicht dargestellt) Dämpfungsventile ausgebildet, durch die das im Dämpferrohr befindliche Öl zur Dämpfung von Schwingungen hindurch treten kann, wenn der Arbeitskolben 22 im Dämpferrohr 11 bewegt wird. Der Arbeitskolben 22 unterteilt in an sich bekannter Weise das Dämpferrohr 11 in einen ersten Arbeitsraum 23, der auf der Kolbenstangenseite angeordnet ist und in einen zweiten Arbeitsraum 24, der auf der Kolbenstangen entfernten Seite des Arbeitskolbens 22 angeordnet ist. Bei einer Bewegung des Arbeitskolbens 22 wird das im Dämpferrohr 11 befindliche Öl zwischen den beiden Arbeitsräumen 23, 24 bewegt. Der zweite Arbeitsraum 24 ist axial durch einen Trennkolben 25 begrenzt, der in an sich bekannter Weise einen Gasraum 26 abschließt.

Die Führung der Kolbenstange 16 sowie die Abdichtung derselben erfolgt durch ein Verschlusspaket, das fest mit dem Dämpferrohr 11 verbunden ist.

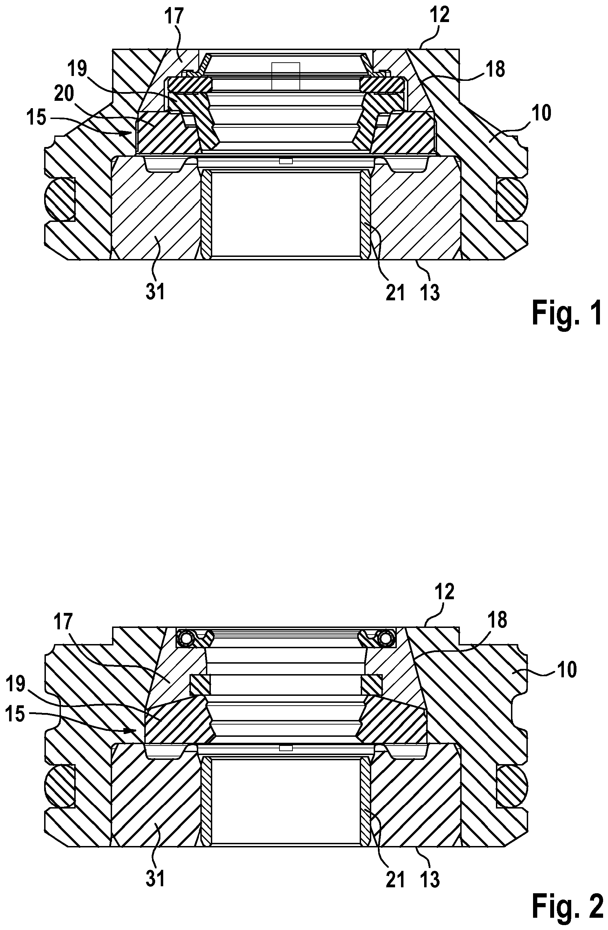

Die Notfallfunktion des Verschlusspakets wird anhand der Figuren 1 und 2 beschrieben, die zwei Ausführungsbeispiele des Verschlusspakets im Normalzustand zeigen, d.h. wenn übliche Betriebsdrücke im Schwingungsdämpfer herrschen, auf die der Schwingungsdämpfer ausgelegt ist. Das Verschlusspaket gemäß Fig. 3 hingegen ist nach aktivierter Notfallfunktion dargestellt, wobei aufgrund Überhitzung und der damit einhergehenden Überdrücke das im Dämpferrohr 11 befindliche Öl kontrolliert abgelassen wurde.

Die Verschlusspakete gemäß Fig. 1, 2 sind unabhängig von dem Schwingungsdämpfer bzw. dem Dämpferrohr 11 dargestellt, werden also solche beansprucht und sind dazu geeignet, mit dem Dämpferrohr 11 in der in Fig. 3 gezeigten Weise verbunden zu werden.

Das Verschlusspaket gemäß Fig. 1 weist einen Grundkörper 10 auf, der, wie in Fig. 3 dargestellt, mit dem Dämpferrohr 11 verbunden werden kann. Der Grundkörper 10 ist als rotationssymmetrisches Bauteil ausgebildet, dessen Außenumfang an den (Innen-) Durchmesser des Dämpferrohres 11 angepasst ist. Der Grundkörper 10 weist zwei axiale Enden 12, 13 auf, wobei das erste Ende 12 im montierten Zustand die Stirnseite 14 des Dämpferrohres 11 bildet, wie in Fig. 3 zu sehen. Das erste Ende 12 des Grundkörpers 10 ist also auf der Außenseite des Dämpferrohres 11 angeordnet. Das zweite gegenüberliegende Ende 13 ist im montierten Zustand im Dämpferrohr 11 angeordnet und begrenzt den ersten Arbeitsraum 23 in axialer Richtung.

Der Grundkörper 10 wird durch zwei Dichtringe 29, 30 gegen das Dämpferrohr 11 abgedichtet.

Der Grundkörper 10 weist eine mittige Ausnehmung auf, in der eine Dichtung 15 angeordnet ist. Die Dichtung 15 ist zur Abdichtung der Kolbenstange 16 vorgesehen, wie in Fig. 3 zu erkennen. Die Dichtung 15 kann mehrteilig ausgebildet sein, wie in Fig. 1 dargestellt. Dazu kann die Dichtung 15 eine Stangendichtung 19 aufweisen, die im Gebrauch an der Kolbenstange 16 anliegt und diese gegen das im Dämpferrohr 11 befindliche Öl abdichtet. Die Dichtung 15 weist ferner eine Zwischendichtung 20 auf, die die Stangendichtung 19 mit dem Grundkörper 10 dichtend verbindet. Die Zwischendichtung 20 ist auf dem Umfang der Stangendichtung 19 angeordnet. Die Zwischendichtung 20 weist einen größeren Durchmesser als die Stangendichtung 19 auf. Die Zwischendichtung 20 und die Stangendichtung 19 sind lösbar miteinander verbunden.

Die Stangendichtung 19 selbst kann wiederrum mehrteilig aufgebaut sein und einen Dichtring 27 aufweisen, der mit einer Dichtkappe 28 verschlossen ist. Die Erfindung ist nicht auf eine spezielle Form der Dichtung eingeschränkt.

Die Dichtung 19 ist einerseits durch einen Dichtungshalter 17 und andererseits durch einen Buchsenhalter 31 im Grundkörper 10 axial fixiert. Der Buchsenhalter 31 weist eine mittige Bohrung auf, in dem eine Führungsbuchse 21 fest angeordnet ist. Die Führungsbuchse 21 und die Dichtung 19 fluchten zueinander. Durch den Dichtungshalter 17 wird die Dichtung 15 in axialer Richtung im Grundkörper 10 gehalten.

Die Dichtung 17 ist am ersten Ende 12 des Grundkörpers 10 angeordnet und befindet sich im Gebrauch an der Außenseite des Dämpferrohres 11.

Die Verbindung des Dichtungshalters 17 und des Grundkörpers 10 erfolgt formschlüssig und/oder kraftschlüssig. Dazu weist der Grundkörper 10 einen konischen Halteabschnitt 18 auf, der sich nach außen hin in axialer Richtung verjüngt. Der Dichtungshalter 17 weist eine entsprechende Außenkontur auf, sodass Haltekräfte auf die Dichtung 15 übertragen werden. Mit anderen Worten entspricht die Außenform des Dichtungshalters 17 der Innenkontur des Grundkörpers 10, die so profiliert ist, dass der Dichtungshalter 17 in axialer Richtung gehalten wird. Die Figuren 1 und 2 zeigen den Normalzustand, bei der der Dichtungshalter 17 seine Wärmeformbeständigkeit aufweist.

Die Ausführungsform gemäß Fig. 2 ist in ähnlicher Weise wie die Ausführungsform gemäß Fig. 1 aufgebaut, wobei der Dichtungshalter 17 überwiegend in axialer Richtung über die Dichtung 19 vorsteht. Die Wirkungsweise ist dieselbe wie bei dem Ausgangsbeispiel gemäß Fig. 1. Der Dichtungshalter 17 fixiert die Dichtung 15 im Grundkörper 10.

Bei dem Dichtungshalter 17 handelt es sich um einen notschmelzbaren Dichtungshalter. Der Begriff notschmelzbarer Dichtungshalter bedeutet, dass der Dichtungshalter aus einem Material besteht oder ein solches umfasst, das bei bestimmten Temperaturen, die die normalen Betriebstemperaturen überschreiten seine Wärmeformbeständigkeit verliert. Diese Grenztemperaturen werden so eingestellt, dass die bei diesen Grenztemperaturen zu erwartenden Drücke nicht dazu führen, dass der Schwingungsdämpfer explodiert oder unkontrolliert beschädigt wird. Die Erfindung ist nicht auf eine bestimmte Grenztemperatur eingeschränkt. Diese liegt jedenfalls oberhalb der Betriebstemperatur des Schwingungsdämpfers. Mit anderen Worten entspricht die Grenztemperatur der Wärmeformbeständigkeitstemperatur des Materials des Dichtungshalters 17.

Bei der Wärmeformbeständigkeitstemperatur handelt es sich allgemein um die Temperatur, bei der der Dichtungshalter 17 sich thermoplastisch so verformt, dass dieser aus dem Grundkörper 10 heraus bewegt wird. Die formschlüssige Verbindung zwischen dem Grundkörper 10 und dem Dichtungshalter 17 wird dabei aufgelöst.

Der geschmolzene oder zumindest plastisch verformte Dichtungshalter 17 kann dann die in Fig. 3 dargestellte Form haben, bei der der Dichtungshalter 17 aus dem konischen Halteabschnitt 18 des Grundkörpers 10 herausgelöst ist. In Fig. 3 ist gut zu erkennen, dass die Dichtung 15 aus der Dichtungsposition im Grundkörper 10 heraus bewegt ist. Durch zwei Pfeile ist angedeutet, dass das im Dämpferrohr 11 befindliche Öl durch den Ringspalt zwischen der Kolbenstange 16 und dem Grundkörper 10 austreten kann, der von der Dichtung 15 freigegeben ist.

Die Erfindung ist nicht darauf beschränkt, dass der Dichtungshalter vollständig aus notschmelzbarem Material besteht. Bei einer entsprechenden Form des Dichtungshalters kann es genügen, dass der Dichtungshalter nur teilweise aus dem thermoplastischen Material besteht, das bei einer bestimmten Grenztemperatur seine Form verliert.

### Bezugszeichenliste

- 10: Grundkörper
- 11: Dämpferrohr
- 12: erstes Ende
- 13: zweites Ende
- 14: Stirnseite des Dämpferrohres
- 15: Dichtung
- 16: Kolbenstange
- 17: Dichtungshalter
- 18: Halteabschnitt
- 19: Stangendichtung
- 20: Zwischendichtung
- 21: Führungshülse
- 22: Arbeitskolben
- 23: erster Arbeitsraum
- 24: zweiter Arbeitsraum
- 25: Trennkolben
- 26: Gasraum
- 27: Dichtring
- 28: Dichtkappe
- 29: Dichtring
- 30: Dichtring
- 31: Buchsenhalter

## Patentansprüche

1. Schwingungsdämpfer mit einem Verschlusspaket, das mit einem Dämpferrohr (11) des Schwingungsdämpfers verbunden ist und eine Kolbenstange (16) führt und abdichtet, wobei das Verschlusspaket aufweist:
- einen Grundkörper (10), der mit einem Dämpferrohr (11) verbindbar ist und zwei Enden (12, 13) aufweist, wobei das erste Ende (12) im Gebrauch eine Stirnseite (14) des Dämpferrohres (11) bildet, und das zweite Ende (13) im Gebrauch im Dämpferrohr (11) angeordnet ist,
- eine Dichtung (15), die im Grundkörper (10) zur Abdichtung einer Kolbenstange (16) angeordnet ist, und
- einen Dichtungshalter (17), der zwischen der Dichtung (15) und dem Grundkörper (10) am ersten Ende (12) angeordnet ist,
wobei der Dichtungshalter (17) zur axialen Fixierung der Dichtung (15) formschlüssig und/oder kraftschlüssig mit dem Grundkörper (10) verbunden ist,
**dadurch gekennzeichnet, dass**
der Dichtungshalter (17) als notschmelzbarer Dichtungshalter ausgebildet ist, der bei Überhitzung des Schwingungsdämpfers zum Lösen der Verbindung mit dem Grundkörper (10) zumindest thermoplastisch verformbar ist.

2. Schwingungsdämpfer nach Anspruch 1
**dadurch gekennzeichnet, dass**
der Dichtungshalter (17) ein Material umfasst, insbesondere aus einem Material besteht, das eine Wärmeformbeständigkeitstemperatur im Bereich von -40°C bis +160°C aufweist.

3. Schwingungsdämpfer nach Anspruch 1 oder 2
**dadurch gekennzeichnet, dass**
der Grundkörper (10) einen konischen Halteabschnitt (18) aufweist, der sich nach außen verjüngt.

4. Schwingungsdämpfer nach einem der Ansprüche 1 bis 3
**dadurch gekennzeichnet, dass**
der Dichtungshalter (17) zumindest abschnittsweise auf dem Umfang der Dichtung (15) angeordnet ist und/oder zumindest abschnittsweise in axialer Richtung des Grundkörpers (10) über die Dichtung (5) in Richtung des ersten Endes (12) vorsteht.

5. Schwingungsdämpfer nach einem der Ansprüche 1 bis 4
**dadurch gekennzeichnet, dass**
die Dichtung (15) mehrteilig ausgebildet ist und eine erste Stangendichtung (19) zur Anlage an der Kolbenstange (16) und eine zweite Zwischendichtung (20) zur Abdichtung der Stangendichtung (19) gegen den Grundkörper (10) aufweist, wobei die Stangendichtung (19) und die Zwischendichtung (20) lösbar verbunden sind.

6. Schwingungsdämpfer nach einem der Ansprüche 1 bis 5
**dadurch gekennzeichnet, dass**
eine Führungsbuchse (21) zwischen der Dichtung (15) und dem zweiten Ende (13) angeordnet ist.

7. Schwingungsdämpfer nach einem der vorangehenden Ansprüche
**dadurch gekennzeichnet, dass**
der Schwingungsdämpfer ein Einrohrdämpfer oder ein Zweirohrdämpfer ist.

## Claims

1. Vibration damper with a closure package which is connected to a damper tube (11) of the vibration damper and guides and seals a piston rod (16), the closure package having:
- a base body (10) which can be connected to a damper tube (11) and has two ends (12, 13), the first end (12) forming an end face (14) of the damper tube (11) in use, and the second end (13) being arranged in the damper tube (11) in use,
- a seal (15), which is arranged in the base body (10) for sealing a piston rod (16), and
- a seal holder (17), which is arranged between the seal (15) and the base body (10) at the first end (12),
wherein the seal holder (17) is positively and/or non-positively connected to the base body (10) for axial fixing of the seal (15),
**characterized in that**
the seal holder (17) is designed as an emergency-fusible seal holder which is at least thermoplastically deformable when the vibration damper overheats in order to release the connection with the base body (10).

2. Vibration damper according to claim 1
**characterized in that**
the seal holder (17) comprises a material, in particular consists of a material, which has a heat distortion temperature in the range from -40°C to +160°C.

3. Vibration damper according to claim 1 or 2
**characterized in that**
the base body (10) has a conical retaining section (18) which tapers outwards.

4. Vibration damper according to one of claims 1 to 3
**characterized in that**
the seal holder (17) is arranged at least in sections on the circumference of the seal (15) and/or protrudes at least in sections in the axial direction of the base body (10) over the seal (5) in the direction of the first end (12).

5. Vibration damper according to one of claims 1 to 4
**characterized in that**
the seal (15) is formed in several parts and has a first rod seal (19) for bearing against the piston rod (16) and a second intermediate seal (20) for sealing the rod seal (19) against the base body (10), the rod seal (19) and the intermediate seal (20) being releasably connected.

6. Vibration damper according to one of claims 1 to 5
**characterized in that**
a guide bushing (21) is arranged between the seal (15) and the second end (13).

7. Vibration damper according to one of the preceding claims **characterized in that**
the vibration damper is a single-tube damper or a twin-tube damper.

## Revendications

1. Amortisseur de vibrations avec un paquet de fermeture qui est relié à un tube d'amortisseur (11) de l'amortisseur de vibrations et qui guide et rend étanche une tige de piston (16), le paquet de fermeture présentant :
- un corps de base (10) qui peut être relié à un tube amortisseur (11) et qui présente deux extrémités (12, 13), la première extrémité (12) formant, en utilisation, une face frontale (14) du tube amortisseur (11), et la deuxième extrémité (13) étant disposée, en utilisation, dans le tube amortisseur (11),
- un joint d'étanchéité (15), qui est disposé dans le corps de base (10) pour assurer l'étanchéité d'une tige de piston (16), et
- un support de joint (17), qui est disposé entre le joint (15) et le corps de base (10) à la première extrémité (12),
le support de joint (17) étant relié au corps de base (10) par complémentarité de forme et/ou par force pour la fixation axiale du joint (15),
**caractérisé en ce que**
le support de joint (17) est conçu comme un support de joint fusible en urgence qui, en cas de surchauffe de l'amortisseur de vibrations, peut être déformé au moins thermoplastiquement pour rompre la liaison avec le corps de base (10).

2. Amortisseur de vibrations selon la revendication 1
**caractérisé en ce que**
le support de joint (17) comprend, en particulier est constitué d'un matériau présentant une température de résistance à la chaleur dans la plage de -40°C à +160°C.

3. Amortisseur de vibrations selon la revendication 1 ou 2 **caractérisé en ce que**
le corps de base (10) présente une section de retenue conique (18) qui se rétrécit vers l'extérieur.

4. Amortisseur de vibrations selon l'une des revendications 1 à 3 **caractérisé en ce que**
le support de joint (17) est disposé au moins par sections sur la périphérie du joint (15) et/ou fait saillie au moins par sections dans la direction axiale du corps de base (10) au-delà du joint (5) en direction de la première extrémité (12).

5. Amortisseur de vibrations selon l'une des revendications 1 à 4 **caractérisé en ce que**
le joint (15) est réalisé en plusieurs parties et présente un premier joint de tige (19) pour l'appui sur la tige de piston (16) et un deuxième joint intermédiaire (20) pour l'étanchéité du joint de tige (19) contre le corps de base (10), le joint de tige (19) et le joint intermédiaire (20) étant reliés de manière détachable.

6. Amortisseur de vibrations selon l'une des revendications 1 à 5 **caractérisé en ce que**
une douille de guidage (21) est disposée entre le joint d'étanchéité (15) et la deuxième extrémité (13).

7. Amortisseur de vibrations selon l'une des revendications précédentes **caractérisé en ce que**
l'amortisseur de vibrations est un amortisseur monotube ou un amortisseur bitube.
